# EUROPÄISCHE PATENTSCHRIFT

(11) **EP 1 935 920 B1**
(45) Veröffentlichungstag und Bekanntmachung des Hinweises auf die Patenterteilung: **02.11.2011**
(21) Anmeldenummer: 07120543.9
(22) Anmeldetag: 13.11.2007
(51) Int. Cl.: C08G 77/08, C08G 77/16, C08G 77/42

(54) **Verfahren zur Umsetzung von Polyorganosiloxanen und deren Verwendung**
Method for converting polyorganosiloxanes and their application
Procédés de transformation de polyorganosiloxanes et leur utilisation

(30) Priorität: 22.12.2006 DE 102006061353
(43) Veröffentlichungstag der Anmeldung: 25.06.2008
(73) Patentinhaber: Evonik Goldschmidt GmbH, 45127 Essen (DE)
(72) Erfinder: Neumann, Thomas, 44869 Bochum (DE); Knott, Wilfried, 45355 Essen (DE)

(56) Entgegenhaltungen:
- DE-A1- 10 312 636

## Beschreibung

Die Erfindung betrifft ein Verfahren zur Umsetzung von Polyorganosiloxanen, bei dem ein an das Silicium gebundenes Wasserstoffatom durch einen Alkoholatrest ersetzt wird, sowie nach diesem Verfahren hergestellte substituierte Polyorganosiloxane und deren Verwendung.

Polyorganosiloxane werden nach dem Stand der Technik industriell über die sogenannte Chlorsiloxanroute hergestellt. In der Chlorsiloxanroute werden am Silicium chlorsubstituierte Polyorganosiloxane mit Alkoholen unter Bildung von alkoxysubstituierten Polyorganosiloxanen umgesetzt. Dieses Verfahren führt zwangsläufig zu erheblichen Mengen an Salzsäureabfällen, die ökologische Probleme sowie bei der Abtrennung erhebliche Kosten verursachen.

Verbindungen, bei denen Polyorganosiloxane mit Alkoholen unter Bildung von alkoxysubstituierten Polyorganosiloxanen aufgeführt sind, ihre Verwendung sowie ein Verfahren zu ihrer Herstellung wird bereits in der DE 103 12 636, DE 10 2004 039 911, DE 103 59 764, DE 10 2004 024 009, DE 10 2004 034 740, DE 10 2005 002 716, DE 10 2006 008 387, DE 10 2005 001 039, DE 103 12 636, DE 10 2005 051 939 beschrieben.

In der DE 103 12 636 wird ein Verfahren zur Umsetzung von ≡Si(H)-Einheiten enthaltenden Polyorganosiloxanen mit wenigstens einem Alkohol beansprucht, welches dadurch gekennzeichnet ist, dass man in einem Verfahrensschritt unter Einsatz einer oder mehrerer Elementverbindungen der III. Haupt- und/oder der 3. Nebengruppe als Katalysator in den (H)Si= Einheiten des Polyorganosiloxans vorhandene Wasserstoffatome teilweise oder vollständig durch Alkoholatreste der eingesetzten Alkohole ersetzt.

Der Lehre dieser Literaturstelle folgend, lassen sich auch teilsubstituierte Polyorganosiloxane herstellen, die neben den substituierten Si-O-C-Einheiten noch nicht umgesetzte ≡Si(H)-Einheiten aufweisen. Dazu wird das Stoffmengenverhältnis von ≡Si(H)-Gruppen zu Alkoholgruppen vorzugsweise im Bereich von 1 : 0,1 bis zu 1 : 0,99 Moläquivalenten eingestellt.

Durch eine derartige Umsetzung in einem unterstöchiometrischen Verhältnis soll ein Rest an nicht umgesetzter ≡Si(H)-Funktion erhalten bleiben, der in einem darauffolgenden Schritt, beispielsweise in einer Hydrosilylierungsreaktion, bei der eine Silicium-Kohlenstoffbindung gebildet wird, umgesetzt werden kann, um gemischte Produkte herzustellen.

Überraschenderweise wurde nun gefunden, dass sich, abweichend von dem offenbarten Stand der Technik, ein Zugang zu hochmolekularen SiOC-verknüpften organyloxysubstituierten (alkoxysubstituierten) Polyorganosiloxanen erschließt, wenn man Organylhydroxy-Verbindungen mit einem stöchiometrischen Überschuss end- und/oder seitenständiger Wasserstoffpoly- und/oder oligosiloxanen in Gegenwart einer oder mehrerer Elementverbindungen der III. Haupt- und/oder der 3. Nebengruppe als Katalysator zur Umsetzung bringt und dann die Reaktion nach vollständig erfolgter Umsetzung der Organylhydroxykomponente (Alkoholkomponente) so lange weiterführt, bis keine ≡Si-H-Gruppen gasvolumetrisch mehr nachweisbar sind. Die gasvolumetrische ≡Si(H)-Wert-Bestimmung erfolgt durch die alkoholatinduzierte Zersetzung einer Probe nach etablierten Verfahren.

Für den Fachmann unvorhersehbar werden auf diese Weise Strukturen erhalten, die als Stabilisatoren bei der Herstellung von Polyurethanschäumen (PU-Schäume), insbesondere PU-Hartschäumen, sprunghaft bessere Eigenschaften aufweisen. Außerdem werden auf diese Weise Strukturen erhalten, die als Entschäumer im Lacke-und Farben-Bereich Verwendung finden.

Ein Gegenstand der Erfindung ist daher ein Verfahren zur Herstellung von SiOC-verknüpften, alkoxysubstituierten Polyorganosiloxanen, durch Umsetzung von Organylhydroxy-Verbindungen mit einem stöchiometrischen Überschuss end- und/oder seitenständiger Wasserstoff-Poly- und/oder Oligosiloxanen in Gegenwart einer oder mehrerer Elementverbindungen der III. Haupt- und/oder der 3. Nebengruppe als Katalysator, welches dadurch gekennzeichnet ist, dass nach vollständig erfolgter Umsetzung der Organylhydroxykomponente (Alkoholkomponente) die Reaktion so lange weitergeführt wird, bis keine ≡Si-H-Gruppen gasvolumetrisch mehr nachweisbar sind.

Ein weiterer Gegenstand der Erfindung sind SiOC-verknüpfte alkoxysubstituierte Polyorganosiloxane, hergestellt gemäß obigem Verfahren.

Ein weiterer Gegenstand der Erfindung ist die Verwendung der gemäß dem erfindungsgemäßen Verfahren hergestellten Verbindungen als grenzflächenaktive Additive zur Herstellung von Polyurethanschäumen wie beispielsweise von Polyurethanetherschäumen.

Ein weiterer Gegenstand der Erfindung ist die Verwendung der gemäß dem erfindungsgemäßen Verfahren hergestellten Verbindungen als grenzflächenaktive Additive zur Herstellung von Entschäumern im Lacke-und Farben-Bereich, zur Ausrüstung von Textilien, als Additive für Kunststoffe oder im Bautenfarbenbereich, als Additive in strahlenhärtenden Beschichtungen, insbesondere Druckfaben.

Weitere Gegenstände der Erfindung sind durch die Ansprüche gekennzeichnet.

Aufgabe der vorliegenden Erfindung war demnach primär, ein Verfahren zur Herstellung von substituierten Polyorganosiloxanen bereitzustellen, mit dem unter Vermeidung der Nachteile des Standes der Technik chlorfrei und ggf. lösungsmittelfrei und unter Verwendung eines stöchiometrischen Überschusses end- und/oder seitenständiger Wasserstoffpoly- und/oder oligosiloxanen in der Reaktion mit Organylhydroxy-Komponenten, Organyloxygruppen geknüpft werden können, wobei im gebildeten Produkt keine ≡Si-H-Gruppen gasvolumetrisch mehr nachweisbar sind.

Diese Aufgabe wird erfindungsgemäß gelöst durch ein Verfahren zur Umsetzung von ≡Si(H)-Einheiten enthaltenden Polyorganosiloxanen der allgemeinen Formel (I) 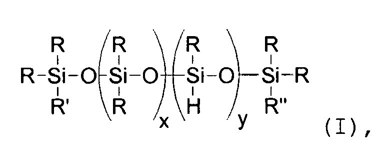 in denen
mindestens ein Wasserstoffatom an ein Siliciumatom gebunden ist,
- R: einen oder mehrere gleiche oder verschiedene Reste, ausgewählt aus linearen oder verzweigten, gesättigten, ein- oder mehrfach ungesättigten Alkyl-, Aryl-, Alkaryl- oder Aralkylresten mit 1 bis 20, insbesondere 1 bis 10 Kohlenstoffatomen, Halogenalkylgruppen mit 1 bis 20 Kohlenstoffatomen, Siloxygruppen und Triorganosiloxygruppen, darstellt,
- R': und R'' unabhängig voneinander H oder R darstellen,
- x: eine ganze Zahl von 0 bis 300,
- y: eine ganze Zahl von 0 bis 100 darstellt,
mit wenigstens einem Alkohol, der ausgewählt ist aus der Gruppe der linearen oder verzweigten, gesättigten, ein- oder mehrfach ungesättigten, aromatischen, aliphatisch-aromatischen Mono- oder Polyalkoholen, Polyethermono- oder Polyetherpolyalkoholen, Aminoalkoholen, insbesondere N-Alkyl-, Arylamino-EO-, -PO-Alkoholen, N-Alkyl- oder Arylaminoalkoholen, einfach oder mehrfach (meth)acrylierte Monoalkoxylate oder Polyalkoxylate, Hydroxyalkyl(meth)acrylate, Hydroxyalkylacrylate, halogenisierten Mono- oder Polyalkoholen, Polyestermonoalkohole, Polyesterpolyalkohole, fluorierte oder perfluorierte Monoalkoxylate oder Polyalkoxylate sowie deren Gemischen, mit einem stöchiometrischen Überschuss von ≡Si(H)-Einheiten enthaltenden Polyorganosiloxanen der allgemeinen Formel (I) in Gegenwart einer oder mehrerer Elementverbindungen der III. Hauptgruppe und/oder der 3. Nebengruppe als Katalysator, welches dadurch gekennzeichnet ist, dass die Reaktion nach vollständig erfolgter Umsetzung der Alkoholkomponente so lange weitergeführt wird, bis keine ≡Si-H-Gruppen gasvolumetrisch mehr nachweisbar sind.

Hervorzuheben ist, dass bei Einsatz ungesättigter Alkohole keine Reaktion der ≡Si(H)-Funktion an der Doppelbindung stattfindet. Auf diese Weise können ungesättigte SiOC-verknüpfte Reaktionsprodukte hergestellt werden.

Als wirksame Katalysatoren im Sinne der vorliegenden Erfindung sind unter den lewissauren Elementverbindungen der III. Hauptgruppe insbesondere borhaltige und/oder aluminiumhaltige Elementverbindung bevorzugt. Von den lewissauren Elementverbindungen der 3. Nebengruppe sind insbesondere scandiumhaltige, yttriumhaltige, lanthanhaltige und/oder lanthanoidhaltige Lewissäuren bevorzugt. Erfindungsgemäß werden die Elementverbindungen der III. Haupt- und/oder 3. Nebengruppe besonders bevorzugt als Halogenide, Alkylverbindungen, fluorhaltige, cycloaliphatische und/oder heterocyclische Verbindungen eingesetzt.

Eine bevorzugte Ausführungsform der Erfindung sieht vor, dass als Elementverbindungen der III. Hauptgruppe borhaltigen Katalysatoren, insbesondere Halogenide, Alkylverbindungen, fluorhaltige, cycloaliphatische und/oder heterocyclische Verbindungen eingesetzt werden.

Eine bevorzugte Ausführungsform der Erfindung sieht vor, dass fluorierte und/oder nicht fluorierte Organoborverbindungen eingesetzt werden, insbesondere solche, die ausgewählt sind aus der Gruppe bestehend aus:
(C₅F₄) (C₆F₅)₂B; (C₅F₄)₃B; (C₆F₅)BF₂; BF(C₆F₅)₂; B(C₆F₅)₃; BCl₂(C₆F₅); BCl(C₆F₅)₂; B(C₆H₅) (C₆F₅)₂; B(Ph)₂(C₆F₅); [C₆H₄(mCF₃)]₃B; [C₆H₄(pOCF₃)]₃B; (C₆F₅)B(OH)₂; (C₆F₅)₂BOH; (C₆F₅)₂BH; (C₆F₅)BH₂; (C₇H₁₁)B(C₆F₅)₂; (C₈H₁₄B) (C₆F₅); (C₆F₅)₂B(OC₂H₅); (C₆F₅)₂B-CH₂CH₂Si(CH₃)₃; 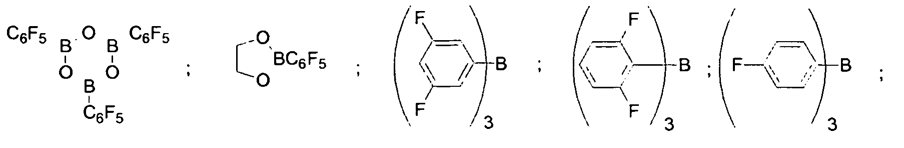 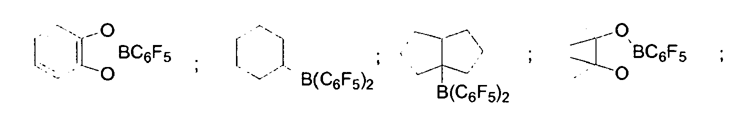 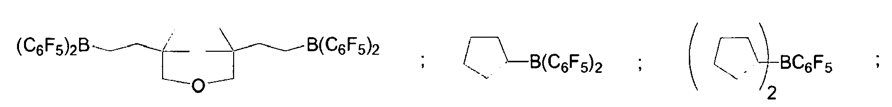 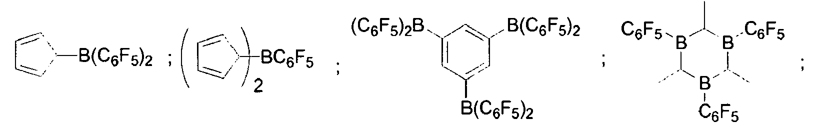 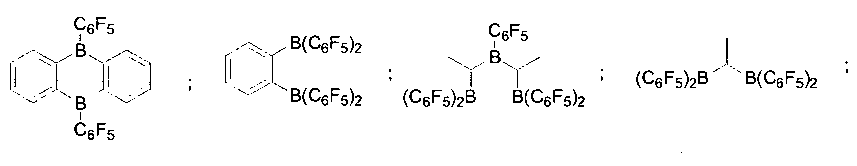
insbesondere Tris (Perfluortriphenylboran) [1109-15-5], Bortrifluorid-Etherat [109-63-7], Boran-Triphenylphosphinkomplex [2049-55-0], Triphenylboran [960-71-4], Triethylboran [97-94-9] und Bortrichlorid [10294-34-5], Tris(pentafluorophenyl)-Boroxin (9Cl) [223440-98-0], 4,4,5,5,-Tetramethyl-2-(pentafluorophenyl)-1,3,2-Dioxaborolan (9Cl) [325142-81-2], 2-(Pentafluorophenyl)-1,3,2-Dioxaborolan (9Cl) [336880-93-4], Bis(pentafluorophenyl)cyclohexylboran [245043-30-5], Di-2,4-cyclopentadien-1-yl(pentafluorophenyl)-Boran (9Cl) [336881-03-9], (Hexahydro-3a(1H)-pentalenyl) bis(pentafluorophenyl)boran (9Cl) [336880-98-9], 1,3-[2-[Bis(pentafluorophenyl)boryl]-ethyl]tetramethyldisiloxan [336880-99-0], 2,4,6-Tris(pentafluorophenyl)borazin (7Cl, 8Cl, 9Cl) [1110-39-0], 1,2-Dihydro-2-(pentafluorophenyl)-1,2-azaborin (9Cl) [336880-94-5], 2-(Pentafluorophenyl)-1,3,2-benzodioxaborol (9Cl) [336880-96-7], Tris(4-trifluoromethoxyphenyl)boran [336880-95-6], Tris(3-trifluoromethylphenyl)boran [24455-00-3], Tris(4-fluorophenyl)boran [47196-74-7], Tris(2,6-difluorophenyl)boran [146355-09-1], Tris(3,5-difluorophenyl)boran [154735-09-8], Methyliumtriphenyltetrakis(pentafluorophenyl)borat [136040-19-2], N,N-Dimethylaniliniumtetrakis(pentyfluorophenyl)borat sowie Gemische der vorstehenden Katalysatoren.

Eine weitere bevorzugte Ausführungsform der Erfindung sieht vor, dass fluorierte und/oder nicht fluorierte Organoaluminiumverbindungen eingesetzt werden, insbesondere solche, die ausgewählt sind aus:
AlCl₃ [7446-70-0], Aluminiumacetylacetonat [13963-57-0], AlF₃ [7784-18-1], Aluminiumtrifluormethansulfonat [74974-61-1], Dii-Butylaluminiumchlorid [1779-25-5], Di-i-Butylaluminiumhydrid [1191-15-7], Triethylaluminium [97-93-8] sowie deren Gemische.

Eine weitere bevorzugte Ausführungsform der Erfindung sieht vor, dass fluorierte und/oder nicht fluorierte Organoscandiumverbindungen eingesetzt werden, insbesondere solche, die ausgewählt sind aus der Gruppe bestehend aus:
Scandium(III)chlorid [10361-84-9], Scandium(III)fluorid [13709-47-2], Scandium(III)hexafluoroacetylacetonat [18990-42-6], Scandium(III)trifluormethansulfonat [144026-79-9], Tris(cyclopentadienyl)scandium [1298-54-0] sowie deren Gemische.

Eine weitere bevorzugte Ausführungsform der Erfindung sieht vor, dass fluorierte und/oder nicht fluorierte Organoyttriumverbindungen eingesetzt werden, insbesondere solche, die ausgewählt sind aus der Gruppe bestehend aus:
Tris(cyclopentadienyl)yttrium [1294-07-1], Yttrium(III)chlorid [10361-92-9], Yttrium(III)fluorid [13709-49-4], Yttrium(III)-hexafluoroacetylacetonat [18911-76-7], Yttrium(III)naphthenat [61790-20-3] sowie deren Gemische.

Eine weitere bevorzugte Ausführungsform der Erfindung sieht vor, dass fluorierte und/oder nicht fluorierte Organolanthanverbindungen eingesetzt werden, insbesondere solche, die ausgewählt sind aus der Gruppe bestehend aus:
Lanthan(III)chlorid [10099-58-8], Lanthan(III)fluorid [13709-38-1], Lanthan(III)iodid [13813-22-4], Lanthan(III)trifluormethansulfonat [52093-26-2], Tris(cyclopentadienyl)lanthan [1272-23-7] sowie deren Gemische.

Eine weitere bevorzugte Ausführungsform der Erfindung sieht vor, dass fluorierte und/oder nicht fluorierte Organolanthanoidverbindungen eingesetzt werden, insbesondere solche, die ausgewählt sind aus der Gruppe bestehend aus:
Cer(III)bromid [14457-87-5], Cer(III)chlorid [7790-86-5], Cer(III)fluorid [7758-88-5], Cer(IV)fluorid [60627-09-0], Cer(III)trifluoracetylacetonat [18078-37-0], Tris(cyclopentadienyl)cer [1298-53-9], Europium(III)fluorid [13765-25-8], Europium(II)chlorid [13769-20-5], Praesodym(III)hexafluoroacetylacetonat [47814-20-0], Praesodym(III)fluorid [13709-46-1], Praesodym(III)trifluoracetylacetonat [59991-56-9], Samarium(III)chlorid [10361-82-7], Samarium(III)fluorid [13765-24-7], Samarium(III)naphthenat [61790-20-3], Samarium(III)-trifluoracetylacetonat [23301-82-8], Ytterbium(III)fluorid [13760-80-8], Ytterbium(III)trifluormethansulfonat [54761-04-5], Tris(cyclopentadienyl)ytterbium [1295-20-1] sowie deren Gemische.

Dabei kann der Katalysator homogen oder als heterogener Katalysator eingesetzt werden. Ebenso ist eine Ausgestaltung als homogenisierte heterogene bzw. heterogenisierte homogene Katalyse im Sinne der Erfindung möglich.

Im erfindungsgemäßen Verfahren kann grundsätzlich jede alkoholische, Hydroxylgruppen aufweisende organische Verbindung eingesetzt werden, einschließlich der Monoalkohole, Diole, Triole, Polyole, Aminoalkohole, fluorierten Alkohole und beliebigen anderen substituierten Alkohole und beispielsweise Hydroxycarbonsäuren und deren jeweiligen Derivate. Besonders bevorzugt sind Ethanol sowie Propylenoxid- bzw. Ethylenoxid-funktionalisierte Polyetheralkohole, die beispielsweise mit Butylalkohol, Allylalkohol oder Nonylphenol gestartet wurden sowie styroloxidhaltige und/oder butylenoxidhaltige Polyetheralkohole. Ferner sind Aminoalkohole besonders bevorzugt. Ferner sind Hydroxyalkyl(meth)acrylate, Polyether-Alkyl(meth)acrylate, Hydroxyalkylacrylate, Polyether-Alkylacrylate besonders bevorzugt. Ein Vorteil dieser Alkohole ist, dass mit ihnen eine besonders wirtschaftliche Verfahrensweise möglich ist.

Der Alkohol wird vorzugsweise im stöchiometrischen Unterschuß eingesetzt. Besonders bevorzugt stellt man beim erfindungsgemäßen Verfahren das Stoffmengen-Verhältnis von SiH-Gruppen zu Alkoholgruppen im Bereich von 1 : 0,1 bis zu 1 : 0,99, vorzugsweise im Bereich von 1 : 0,5 bis 1 : 0,99, insbesondere im Bereich von 1 : 0,7 bis 0,95 Moläquivalenten ein.

Im erfindungsgemäßen Verfahren eingesetzte Polyorganosiloxane können rein endständig, d.h. ≡Si(H)-Gruppen befinden sich lediglich an den Kopfgruppen der Polysiloxankette, rein seitenständig, d.h. ≡Si(H)-Gruppen finden sich lediglich im Innern, nicht jedoch an den Kopfgruppen der Polysiloxankette, oder gemischtständig sein.

In gleicher Weise und ganz besonders bevorzugt können im erfindungsgemäßen Verfahren kammartige, α,ω-disubstituierte und gemischte Polydimethyl-Wasserstoffsiloxane der allgemeinen Formel (I) eingesetzt werden.

Ganz besonders bevorzugt ist beispielsweise der Einsatz von Polyorganosiloxanen der nachstehenden Formel (II)

M-O-Dₓ-D'_{y}-M (II)

wobei
- M: für Trialkylsilyl, insbesondere Trimethylsilyl steht,
- Dₓ: für (Dialkylsilyloxy)ₓ, insbesondere (Dimethylsilyloxy)ₓ und
- D'_{y}: für (-O(CH₃)Si(H)_{y}-
steht.

Ebenso ganz besonders bevorzugt ist beispielsweise der Einsatz von Polyorganosiloxanen der nachstehenden Formel (III)

M'-O-Dₓ--M' (III)

wobei
- M': für Dialkyl(hydrogen)silyl, insbesondere Dimethylhydrogensilyl steht und
- Dₓ: für (Dialkylsilyloxy)ₓ, insbesondere (Dimethylsilyloxy)ₓ
steht.

Ebenso ganz besonders bevorzugt ist beispielsweise der Einsatz von Polyorganosiloxanen der nachstehenden Formel (IV)

M'-O-Dₓ-D'_{y}-M' (IV)
wobei
- M': für Dialkyl(hydrogen)silyl, insbesondere Dimethylhydrogensilyl,
- Dₓ: für (Dialkylsilyloxy)ₓ, insbesondere (Dimethylsilyloxy)ₓ steht und
- D'_{y}: für (-O(CH₃)Si(H)_{y}-
steht.

Das erfindungsgemäße Verfahren kann lösungsmittelfrei durchgeführt werden, was insbesondere für die großtechnische Realisierung unter wirtschaftlichen und ökologischen Aspekten einen erheblichen Vorteil gegenüber dem Verfahren des Standes der Technik darstellt.

Eine weitere Ausführungsform der vorliegenden Erfindung betrifft Polyorganosiloxane, erhältlich durch ein erfindungsgemäßes Verfahren.

Im Gegensatz zum Verfahren nach dem Stand der Technik sind erfindungsgemäß Polyorganosiloxane herstellbar, die mit Organyloxy-Gruppen und/oder Amino-Organyloxy-Gruppen substituiert wurden und nicht mit aus der Substitutionsreaktion stammender Salzsäure, Chlorwasserstoff bzw. deren Neutralisationsprodukten entsprechenden Chloriden verunreinigt sind. Dies erleichtert eine Weiterverarbeitung bzw. Aufarbeitung erheblich. Beispielsweise entfällt eine aufwendige Abfiltration des chloridhaltigen Neutralisationsproduktes, beispielsweise in Form von Ammoniumchlorid. Neben der Vermeidung von Neutralisationsprodukten im vorgenannten Sinne und der Vermeidung von Filterhilfe entstehen keine Produktverluste durch am Salz oder eventuell auch an der Filtrierhilfe anhaftende Produkte.

Mit dem erfindungsgemäßen Verfahren ist daher ein Weg gefunden worden, Polyorganosiloxane, enthaltend endständige und/oder seitenständige Si-O-C-verknüpfte einheitliche oder gemischte Reste, ausgewählt aus linearen oder verzweigten, gesättigten, ein- oder mehrfach ungesättigten, aromatischen, aliphatisch-aromatischen Mono- oder Polyalkoholen, Hydroxyalkyl(meth)acrylate, Polyether-Alkyl(meth)acrylate, Hydroxyalkylacrylate, Polyether-Alkylacrylate, Polyethern, Polyetheralkoholen oder Aminoalkoholen, insbesondere N-Alkyl-, Arylamino-EO-, -PO-Alkoholen, N-Alkyl- oder Arylaminoalkoholen oder Gemischen davon, herzustellen, die frei sind von den genannten Verunreinigungen, insbesondere Restbestandteilen an Salzsäure und Neutralisationsprodukten, die Chlorid enthalten.

Dabei sind solche Polyorganosiloxane besonders bevorzugt, in denen die Reste ausgewählt sind aus einfachen Alkoholen wie Methanol, Ethanol, 1H-pentadecafluoro-1-octanol etc. und Butylpolyether, Allylpolyether, Nonylphenolpolyether, Methylpolyether, Hydroxyethylacrylat, Hydroxypropylacrylat, Hydroxybutylacrylat, Bisomer PEA 6, monoacrylierten Dicaprolacton (Sartomer SR 495), Pentaerithritoltriacrylat und/oder Aminopolyether.

Die erfindungsgemäßen Polyorganosiloxane können in einer weiteren Ausführungsform der Erfindung bevorzugt für die Ausrüstung von Textilien, als Additive für Kunststoffe oder im Bautenfarbenbereich, als Additive in strahlenhärtenden Beschichtungen, insbesondere Druckfarben und/oder als Polyurethan-Schaumstabilisatoren verwendet werden.

### Ausführungsbeispiele:

### Siloxane:

Bei den Siloxanen handelte es sich im Allgemeinen um rein endständige Siloxane (beispielsweise: M'-O-D₁₃-M') oder um rein seitenständige Siloxane (beispielsweise: M-O-D'₅-D₂₂-M).

### Alkohole:

Die Polyetheralkohole wurden vor dem Einsatz durch eine Destillation im Vakuum von Restwasserspuren befreit.

### Borhaltiger Katalysator:

Der Katalysator wurde wie kommerziell erhältlich, d.h. ohne weitere Behandlung und Aufreinigung, eingesetzt.

### Reaktionsführung:

Alle Reaktionen wurden unter Schutzgas ausgeführt. Bei der Reaktion entstand Wasserstoff, der über einen Blasenzähler abgeleitet wurde. Es wurden drei Arten der Reaktionsführung unterschieden.

### Reaktionsführung (A):

Vorlage Polyether/Alkohol, Aufheizen auf Reaktionstemperatur, Zugabe Katalysator und anschließendes Zutropfen des Siloxans unter Temperaturkontrolle.

### Reaktionsführung (B):

Vorlage Siloxan, Aufheizen auf Reaktionstemperatur, Zugabe Katalysator und anschließendes Zutropfen des Polyether/Alkohol unter Temperaturkontrolle.

### Reaktionsführung (C):

Vorlage Siloxan und Polyether/Alkohol, Aufheizen auf Reaktionstemperatur, Zugabe des Katalysators und Durchführung der Reaktion.

### Analysen:

Der Umsatz wurde durch die Bestimmung der Rest SiH-Funktionen mittels einer gasvolumetrischen Wasserstoffbestimmung [Umsatzangabe in %; SiH-Wert in val/kg Prüfsubstanz] ermittelt. Die Iodzahl, Verbrauch an Iod durch die Reaktion mit einer Doppelbindung, wurde zur Bestimmung der Doppelbindungsvalenzen herangezogen [Iodzahl angegeben in g I₂/100g Prüfsubstanz]. Die OH-Zahl wurde durch die Reaktion von Phthalsäureanydrid mit freien Hydroxygruppen ermittelt. Die freie Säure wurde mit einer Basenlösung zurücktitriert [OH-Zahl angegeben in mg KOH/g Prüfsubstanz]. Die Viskosität wurde in einem Kugelfallviskosimeter bestimmt (DIN Methode 53015).

Im Folgenden sind zunächst Umsetzungen der endständigen Wasserstoffsiloxane und dann die Reaktion eines seitenständigen Siloxans beschrieben.

### A) Umsetzungen von α,ω-Wasserstoffsiloxanen in einer dehydrogenativen Hydrosilylierung

### Beispiel 1:

### Umsetzung von M'-O-D13-M'-Siloxan mit einem Unterschuss an Butylpolyether unter Verwendung von Tris(Perfluortriphenylboran)

Umgesetzt wurden 100 g M'-O-D13-M'-Siloxan (SiH-Wert 1,77 val/kg) mit 269,3 g eines mit Butylalkohol gestarteten, rein (Propylenoxid) PO-haltigen Polyethers (mittlere Molmasse von 1.900 g/Mol) mit einer OH-Zahl von 29,5. Der Polyether wurde mit 20 Mol% Unterschuss, bezogen auf den SiH Wert, eingesetzt. Nach Reaktionsführung (A) gab man bei 95 °C 0,17 g Tris(Perfluortriphenylboran), entsprechend 0,19 Mol-%, bezogen auf den SiH-Wert, zu. Ca. 180 min nach beendeter Siloxandosierung lag der Umsatz, entsprechend der SiH-Wert-Methode, bei 99,8 %. Das Produkt hatte eine Viskosität von 446 mPas.

### Beispiel 2:

### Umsetzung von M'-O-D13-M'-Siloxan mit einem Unterschuss an Butylpolyether unter Verwendung von Tris(Perfluortriphenylboran)

Umgesetzt wurden 100 g M'-O-D13-M'-Siloxan (SiH-Wert 1,77 val/kg) mit 269,3 g eines mit Butylalkohol gestarteten, rein PO-haltigen Polyethers (mittlere Molmasse von 1.900 g/Mol) mit einer OH-Zahl von 29,5. Der Polyether wurde mit 20 Mol % Unterschuss, bezogen auf den SiH Wert, eingesetzt. Nach Reaktionsführung (C) gab man bei 95 °C 0,11 g Tris(Perfluortriphenylboran), entsprechend 0,12 Mol-%, bezogen auf den SiH-Wert, zu. Ca. 60 min nach Katalysatorzugabe lag der Umsatz, entsprechend der SiH-Wert-Methode, bei 100 %. Das Produkt hat eine Viskosität von 443 mPas.

### Vergleichsbeispiel 1:

### Umsetzung von M'-O-D13-M'-Siloxan mit einem Überschuss an Butylpolyether unter Verwendung von Tris(Perfluortriphenylboran)

Umgesetzt wurden 80 g M'-O-D13-M'-Siloxan (SiH-Wert 1,77 val/kg) mit 296,2 g eines mit Butylalkohol gestarteten, rein PO-haltigen Polyethers (mittlere Molmasse von 1.900 g/Mol) mit einer OH-Zahl von 29,5. Der Polyether wurde mit 10 Mol % Überschuss, bezogen auf den SiH Wert, eingesetzt. Nach Reaktionsführung (A) gab man bei 95 °C 0,11 g Tris(Perfluortriphenylboran), entsprechend 0,15 Mol-%, bezogen auf den SiH-Wert, zu. Ca. 30 min nach beendeter Siloxandosierung lag der Umsatz, entsprechend der SiH-Wert-Methode, bei 100 %. Das Produkt hatte eine Viskosität von 389 mPas.

### B) Umsetzungen seitenständiger Wasserstoffsiloxane in einer dehydrogenativen Hydrosilylierung

### Beispiel 3:

### Umsetzung von M-O-D'5-D22-M-Siloxan mit einem Unterschuss an Allylpolyether unter Verwendung von Tris(Perfluortriphenylboran)

Umgesetzt wurden 50 g M-O-D'5-D22-M-Siloxan (SiH-Wert 2,46 val/kg SiH) mit 82,7 g eines mit Allylalkohol gestarteten, gemischt EO-/PO-haltigen Polyethers (mittlere Molmasse von 840 g/Mol; PO-Anteil beträgt 26 Mol-%) mit einer Iod-Zahl von 30,2 g I₂/100g bzw. mit einer OH-Zahl von 69,3mg KOH/g. Der Polyether wurde mit 20 Mol-% Unterschuss, bezogen auf den SiH Wert, eingesetzt. Nach Reaktionsführung (C) gab man bei 90 °C 0,31 g Tris(Per-fluor-triphenylboran), entsprechend 0,5 Mol-%, bezogen auf den SiH-Wert, zu. Ca. 120 min nach der Katalysatorzugabe lag der Umsatz nach der SiH - Wert Methode bei ca. 100 %. Das Produkt hatte eine Viskosität von 7245 mPas und eine Iodzahl von 18,7 g I₂/100g (theoretische Iod-Zahl 18,8 g I₂/100g entsprechend nahezu vollständig vorhandener Doppelbindungen).

### Vergleichsbeispiel 2:

### Umsetzung von M-O-D'5-D22-M-Siloxan mit equimolaren Mengen an Allylpolyether un-ter Verwendung von Tris(Perfluortriphenylboran)

Umgesetzt wurden 50 g M-O-D'5-D22-M-Siloxan (SiH-Wert 2,46 val/kg SiH) mit 103,4 g eines mit Allylalkohol gestarteten, gemischt EO-/PO-haltigen Polyethers (mittlere Molmasse von 840 g/Mol; PO-Anteil beträgt 26 Mol-%) mit einer Iod-Zahl von 30,2 g I₂/100g bzw. mit einer OH-Zahl von 69,3mg KOH / g. Der Polyether wurde mit 0 Mol-% Unterschuss, bezogen auf den SiH Wert, eingesetzt. Nach Reaktionsführung (C) gab man bei 90 °C 0,31 g Tris(Per-fluor-triphenylboran), entsprechend 0,5 Mol-%, bezogen auf den SiH-Wert, zu. Ca. 180 min nach Katalysatorzugabe lag der Umsatz nach der SiH - Wert Methode bei ca. 100 %. Das Produkt hatte eine Viskosität von 371 mPas und eine Iodzahl von 20,4 g I₂/100g (theoretische Iod-Zahl 20,4 g I₂/100g entsprechend vollständig vorhandener Doppelbindungen).

## Patentansprüche

1. Verfahren zur Umsetzung von ≡Si(H)-Einheiten enthaltenden
Polyorganosiloxanen der allgemeinen Formel (I) 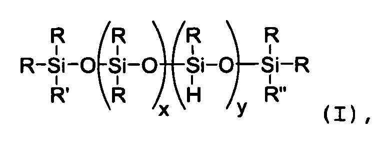 in denen
mindestens ein Wasserstoffatom an ein Siliciumatom gebunden ist,
R einen oder mehrere gleiche oder verschiedene Reste,
ausgewählt aus linearen oder verzweigten, gesättigten, ein- oder mehrfach ungesättigten Alkyl-, Aryl-, Alkaryl- oder Aralkylresten mit 1 bis 20, insbesondere 1 bis 10 Kohlenstoffatomen, Halogenalkylgruppen mit 1 bis 20 Kohlenstoffatomen, Siloxygruppen und Triorganosiloxygruppen, darstellt,
R' und R" unabhängig voneinander H oder R darstellen,
x eine ganze Zahl von 0 bis 300,
y eine ganze Zahl von 0 bis 100 darstellt,
mit wenigstens einem Alkohol, der ausgewählt ist aus der Gruppe der linearen oder verzweigten, gesättigten, ein- oder mehrfach ungesättigten, aromatischen, aliphatischaromatischen Mono- oder Polyalkoholen, Polyethermono- oder Polyetherpolyalkoholen, Aminoalkoholen, insbesondere N-Alkyl-, Arylamino-EO-, -PO-Alkoholen, N-Alkyl- oder Arylaminoalkoholen, einfach oder mehrfach (meth)acrylierte Monoalkoxylate oder Polyalkoxylate, Hydroxyalkyl(meth)acrylate, Hydroxyalkylacrylate, halogenisierten Mono- oder Polyalkoholen, Polyestermonoalkohole, Polyesterpolyalkohole, fluorierte oder perfluorierte Monoalkoxylate oder Polyalkoxylate sowie deren Gemischen, mit einem stöchiometrischen Überschuss von ≡Si(H)-Einheiten enthaltenden Polyorganosiloxanen der allgemeinen Formel (I) in Gegenwart einer oder mehrerer Elementverbindungen der III. Hauptgruppe und/oder der 3. Nebengruppe als Katalysator, welches **dadurch gekennzeichnet ist, dass** die Reaktion nach vollständig erfolgter Umsetzung der Alkoholkomponente so lange weitergeführt wird, bis keine ≡Si-H-Gruppen gasvolumetrisch mehr nachweisbar sind.

2. Verfahren gemäß Patentanspruch 1, **dadurch gekennzeichnet, dass** man als Elementverbindungen der III. Hauptgruppe einen oder mehrere borhaltige Katalysatoren einsetzt.

3. Verfahren gemäß Patentanspruch 1 oder 2, **dadurch gekennzeichnet, dass** man als Elementverbindungen der III. Hauptgruppe Halogenide, Alkylverbindungen, fluorhaltige, cycloaliphatische und/oder heterocyclische Verbindungen einsetzt.

4. Verfahren gemäß Patentanspruch 2 oder 3, **dadurch gekennzeichnet, dass** man einen Katalysator einsetzt, der ausgewählt ist aus der Gruppe bestehend aus
(C₅F₄)(C₆F₅)₂B; (C₅F₄)₃B; (C₆F₅)BF_{2;} BF(C₆F₅)₂; B(C₆F₅)₃; BCl₂(C₆F₅); BCl(C₆F₅)₂; B(C₆H₅)(C₆F₅)₂; B(Ph)₂(C₆F₅); [C₆H₄(mCF₃)]₃B; [C₆H₄(pOCF₃)]₃B; (C₆F₅)B(OH)₂; (C₆F₅)₂BOH; (C₆F₅)₂BH; (C₆F₅)BH₂; (C₇H₁₁)B(C₆F₅)₂; (C₈H₁₄B)(C₆F₅); (C₆F₅)₂B(OC₂H₅); (C₆F₅)₂B-CH₂CH₂Si(CH₃)₃; 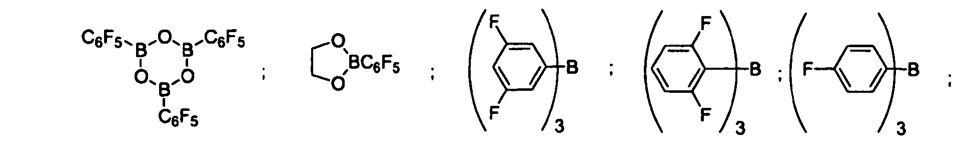 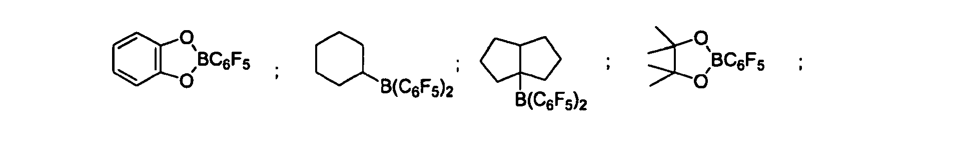 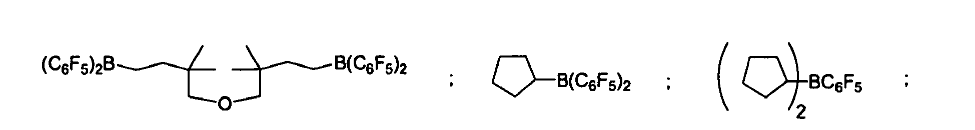 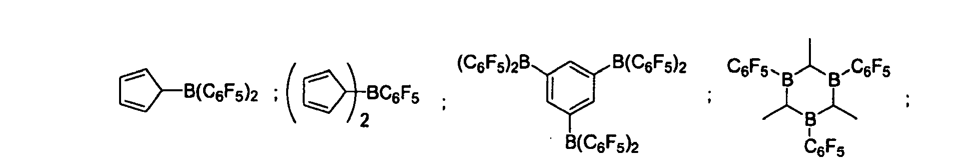 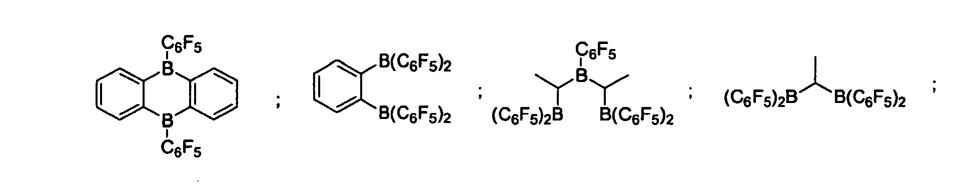 insbesondere Tris(Perfluortriphenylboran), Bortrifluorid-Etherat, Boran-Triphenylphosphinkomplex, Triphenylboran, Triethylboran und Bortrichlorid, Tris(pentafluorophenyl)-Boroxin (9Cl), 4,4,5,5,-Tetramethyl-2-(pentafluorophenyl)-1,3,2-Dioxaborolane (9Cl), 2-(Pentafluorophenyl)-1,3,2-Dioxaborolane (9Cl), Bis(pentafluorophenyl)cyclohexylboran, Di-2,4-cyclopentadien-1-yl(pentafluorophenyl)boran (9Cl), (Hexahydro-3a(1H)-pentalenyl) bis(pentafluorophenyl)boran (9Cl), 1,3-[2-[Bis(pentafluorophenyl)boryl]ethyl]tetra-methyldisiloxan, 2,4,6-Tris(pentafluorophenyl)borazin (7Cl, 8Cl, 9Cl), 1,2-Dihydro-2-(pentafluorophenyl)-1,2-azaborin (9Cl), 2-(Pentafluorophenyl)-1,3,2-benzodioxaborol (9Cl), Tris(4-trifluoromethoxyphenyl)boran, Tris(3-trifluoro-methylphenyl) boran, Tris(4-fluorophenyl)boran, Tris(2,6-difluorophenyl-)boran, Tris(3,5-difluorophenyl)boran, Methyliumtriphenyltetrakis(pentafluorophenyl)borat, N,N-Dimethylaniliniumtetrakis(pentyfluorophenyl)borat sowie deren Gemische.

5. Verfahren gemäß einem der Patentansprüche 1 bis 4, **dadurch gekennzeichnet, dass** man einen Alkohol einsetzt, der ausgewählt ist aus der Gruppe Methanol, Ethanol, fluorierte Alkohole, Butylpolyetheralkohole, Allylpolyetheralkohole oder Nonylphenolpolyeteralkohole, ethylenoxidhaltige und/oder propylenoxidhaltige und/oder styroloxidhaltige und/oder butylenoxidhaltige Polyetheralkohole, Aminoalkohole, einfach oder mehrfach (meth)acrylierte Monoalkoxylate oder Polyalkoxylate, Hydroxyalkyl-(meth)acrylate, Hydroxyalkylacrylate, halogenisierten Mono-oder Polyalkoholen, Polyestermonoalkohole, Polyesterpolyalkohole, fluorierte oder perfluorierte Monoalkoxylate oder Polyalkoxylate sowie deren Gemische.

6. Verfahren gemäß einem der Patentansprüche 1 bis 5 , **dadurch gekennzeichnet, dass** man ein Stoffmengenverhältnis von ≡SiH-Gruppen zu Alkoholgruppen im Bereich von 1 : 0,1 bis 1 _{:} 0,99 Moläquivalenten einstellt.

7. Verfahren gemäß einem der Patentansprüche 1 bis 6, **dadurch gekennzeichnet, dass** man Polyorganosiloxane einsetzt, die ausgewählt sind aus der Gruppe der kammartigen und/oder α,ω-disubstituierten Polydimethyl-Wasserstoffsiloxane der allgemeinen Formel (I).

8. Verfahren gemäß Patentanspruch 7, **dadurch gekennzeichnet, dass** man Polyorganosiloxane einsetzt, die ausgewählt sind aus Verbindungen der allgemeinen Formel (II)
M-O-Dₓ-D'_{y}-M (II)
wobei
M für Trialkylsilyl, insbesondere Trimethylsilyl steht, Dₓ für (Dialkylsilyloxy)ₓ, insbesondere (Dimethyl-silyloxy)ₓ steht,
D'y für (-O(CH3)Si(H)y-steht.

9. Verfahren gemäß Patentanspruch 7, **dadurch gekennzeichnet, dass** man Polyorganosiloxane einsetzt, die ausgewählt sind aus Verbindungen der allgemeinen Formel (III)
M'-O-Dₓ-M' (III)
wobei
M' für Dialkyl(hydrogen)silyl, insbesondere Dimethylhydrogensilyl steht und
Dₓ für (Dialkylsilyloxy)ₓ, insbesondere (Dimethyl-silyloxy)ₓ
steht.

10. Verfahren gemäß Patentanspruch 7, **dadurch gekennzeichnet, dass** man Polyorganosiloxane einsetzt, die ausgewählt sind aus der Gruppe der allgemeinen Formel (IV)
M'-O-Dₓ-D'_{y}-M' (IV)
wobei
M' für Dialkyl(hydrogen)silyl, insbesondere Dimethylhydrogensilyl steht,
Dₓ für (Dialkylsilyloxy)ₓ, insbesondere (Dimethyl-silyloxy)ₓ steht,
D'y für (-O(CH₃)Si(H)_{y}-steht.

11. Verfahren gemäß einem der Patentansprüche 1 bis 10, **dadurch gekennzeichnet, dass** man die Umsetzung lösungsmittelfrei durchführt.

12. Polyorganosiloxane, erhältlich durch ein Verfahren gemäß einem der Patentansprüche 1 bis 11.

13. Substituierte Polyorganosiloxane, gemäß Anspruch 12, , enthaltend endständige und/oder seitenständige Si-O-C-verknüpfte einheitliche oder gemischte Reste, ausgewählt aus linearen oder verzweigten, gesättigten, ein- oder mehrfach ungesättigten, aromatischen, aliphatischaromatischen Mono- oder Polyalkoholen, Polyethern, Polyetheralkoholen oder Aminoalkoholen, insbesondere N-Alkyl-, Arylamino-EO-, -PO-Alkoholen, N-Alkyl- oder Arylaminoalkoholen einfach oder mehrfach (meth)acrylierte Monoalkoxylate oder Polyalkoxylate, Hydroxyalkyl-(meth)acrylate, Hydroxyalkylacrylate, halogenisierten Mono-oder Polyalkoholen, Polyestermonoalkohole, Polyesterpolyalkohole, fluorierte oder perfluorierte Monoalkoxylate oder Polyalkoxylate oder Gemischen davon, **dadurch gekennzeichnet, dass** sie frei sind von Restbestandteilen an Salzsäure und Neutralisationsprodukten, die Chlorid enthalten, **dadurch gekennzeichnet, dass** man Polyorganosiloxane einsetzt, die ausgewählt sind aus der Gruppe der kammartigen und/oder α,ω-disubstituierten Polydimethyl-Wasserstoffsiloxane der allgemeinen Formel (I) oder die Umsetzung lösungsmittelfrei durchführt.

14. Polyorganosiloxane gemäß Patentanspruch 13, **dadurch gekennzeichnet, dass** die Reste ausgewählt sind aus Ethoxy, Butylpolyether, Allylpolyether, und Nonylphenylpolyether, Methylpolyether, ethylenoxid- und/oder propylenoxid- und/oder styroloxid- und oder butylenoxidhaltigen Polyethern, Aminoalkoholen, Hydroxyethylacrylat, Hydroxypropylacrylat, Hydroxybutylacrylat, Bisomer PEA 6, monoacrylierten Dicaprolacton (Sartomer SR 495), Pentaerithritoltriacrylat und/oder Aminopolyether sowie Gemischen davon.

15. Verwendung von Polyorganosiloxanen gemäß Patentanspruch 12 zur Ausrüstung von Textilien, als Additive für Kunststoffe oder im Bautenfarbenbereich, als Additive in strahlenhärtenden Beschichtungen, insbesondere Druckfarben und/oder als Polyurethan-Schaumstabilisatoren verwendet werden.

## Claims

1. Process for reacting polyorganosiloxanes which contain ≡Si(H) units and are of the general formula (I) 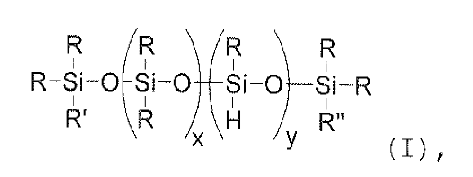 in which
at least one hydrogen atom is bonded to a silicon atom,
R represents one or more identical or different
radicals selected from linear or branched, saturated, monounsaturated or polyunsaturated alkyl, aryl, alkaryl or aralkyl radicals having from 1 to 20, especially from 1 to 10 carbon atoms, haloalkyl groups having from 1 to 20 carbon atoms, siloxy groups and triorganosiloxy groups,
R' and R" are each independently H or R,
x is an integer from 0 to 300,
y is an integer from 0 to 100,
with at least one alcohol which is selected from the group of the linear or branched, saturated, monounsaturated or polyunsaturated, aromatic, aliphatic-aromatic mono- or polyalcohols,
polyether monoalcohols or polyether polyalcohols, aminoalcohols, especially N-alkyl-, arylamino-EO- and -PO-alcohols, N-alkyl- or arylaminoalcohols, mono- or poly(meth)acrylated monoalkoxylates or polyalkoxylates, hydroxyalkyl methacrylates, hydroxyalkyl acrylates, halogenated mono- or polyalcohols, polyester monoalcohols, polyester polyalcohols, fluorinated or perfluorinated monoalkoxylates or polyalkoxylates and mixtures thereof, with a stoichiometric excess of polyorganosiloxanes which contain ≡Si(H) units and are of the general formula (I) in the presence of one or more element compounds of main group III and/or transition group 3 as a catalyst, **characterized in that** the reaction, on completion of conversion of the alcohol component, is continued until no further ≡Si-H groups can be detected by gas volumetric means.

2. Process according to Claim 1, **characterized in that** the element compounds of main group III are one or more boron-containing catalysts.

3. Process according to Claim 1 or 2, **characterized in that** the element compounds of main group III used are halides, alkyl compounds, fluorinated, cycloaliphatic and/or heterocyclic compounds.

4. Process according to Claim 2 or 3, **characterized in that** a catalyst is used which is selected from the group consisting of
(C₅F₄) (C₆F₅)₂B; (C₅F₄)₃B; (C₆F₅)BF₂; BF(C₆F₅)₂; B(C₆F₅)₃; BCl₂(C₆F₅); BCl(C₆F₅)₂; B(C₆H₅)(C₆F₅)₂; B(Ph)₂(C₆F₅); [C₆H₄(mCF3)]₃B; [C₆H₄(pOCF3)]₃B; (C₆F₅)B(OH)₂; (C₆F₅)₂BOH; (C₆F₅)₂BH; (C₆F₅)BH₂; (C₇H₁₁)B(C₆F₅)₂; (C₈H₁₄B)(C₆F₅); (C₆F₅)₂B(OC₂H₅); (C₆F₅)₂B-CH₂CH₂Si(CH₃)₃; 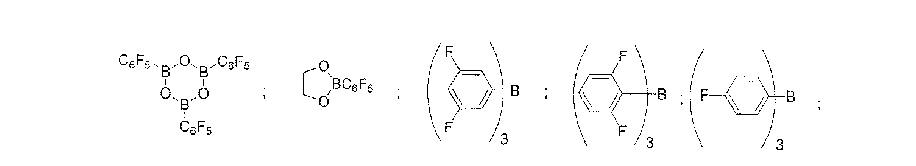 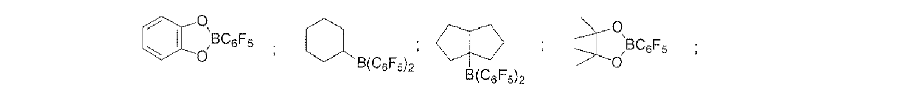 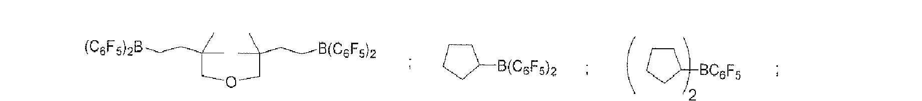 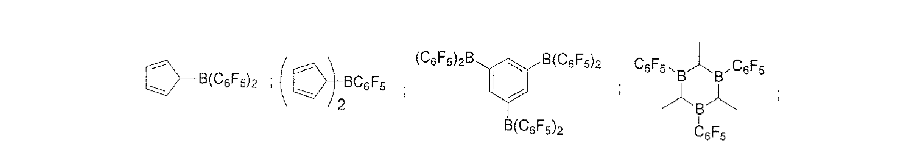 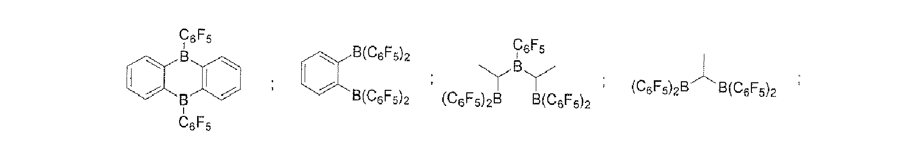 especially tris(perfluorotriphenylborane), borane trifluoride etherate, borane-triphenylphosphine complex, triphenylborane, triethylborane and boron trichloride, tris(pentafluorophenyl)boroxine (9Cl), 4,4,5,5-tetramethyl-2-(pentafluorophenyl)-1,3,2-dioxaborolane (9Cl), 2-(pentafluorophenyl)-1,3,2-dioxaborolane (9Cl), bis(pentafluorophenyl)cyclohexylborane, di-2,4-cyclopentadien-l-yl(pentafluorophenyl)borane (9Cl), (hexahydro-3a(1H)-pentalenyl)bis(pentafluorophenyl)borane (9Cl), 1,3-[2-[bis(pentafluorophenyl)boryl]ethyl]tetramethyldisiloxane, 2,4,6-tris(pentafluorophenyl)borazine (7Cl, 8Cl, 9Cl), 1,2-dihydro-2-(pentafluorophenyl)-1,2-azaborine (9Cl), 2-(pentafluorophenyl)-1,3,2-benzodioxaborol (9Cl), tris(4-trifluoromethoxyphenyl)borane, tris(3-trifluoromethylphenyl)borane, tris(4-fluorophenyl)borane, tris(2,6-difluorophenyl)borane, tris(3,5-difluorophenyl)borane, methyliumtriphenyl tetrakis (pentafluorophenyl)borate, N,N-dimethyl-anilinium tetrakis (pentafluorophenyl)borate and mixtures thereof.

5. Process according to one of Claims 1 to 4, **characterized in that** an alcohol is used which is selected from the group of methanol, ethanol, fluorinated alcohols, butyl polyether alcohols, allyl polyether alcohols or nonylphenyl polyether alcohols, ethylene oxide-containing and/or propylene oxide-containing and/or styrene oxide-containing and/or butylene oxide-containing polyether alcohols, amino alcohols, mono- or poly(meth)acrylated monoalkoxylates or polyalkoxylates, hydroxyalkyl (meth)acrylates, hydroxyalkyl acrylates, halogenated mono- or polyalcohols, polyester monoalcohols, polyester polyalcohols, fluorinated or perfluorinated monoalkoxylates or polyalkoxylates and mixtures thereof.

6. Process according to one of Claims 1 to 5, **characterized in that** a quantitative ratio of ≡SiH groups to alcohol groups in the range from 1 _{:} 0.1 to 1 : 0.99 molar equivalents is established.

7. Process according to one of Claims 1 to 6, **characterized in that** polyorganosiloxanes are used which are selected from the group of the comb-like and/or α,ω-disubstituted polydimethyl hydrosiloxanes of the general formula (I).

8. Process according to Claim 7, **characterized in that**
polyorganosiloxanes are used which are selected from compounds of the general formula
M-O-Dₓ-D'_{y}-M (II)
where
M is trialkylsilyl, especially trimethylsilyl,
Dₓ is (dialkylsilyloxy)ₓ, especially (dimethyl-silyloxy)**ₓ,**
D' y is (-O(CH₃)Si(H)y)-.

9. Process according to Claim 7, **characterized in that** polyorganosiloxanes are used which are selected from compounds of the general formula (III)
M'-O-Dₓ-M (III)
where
M' is dialkyl(hydro)silyl, especially dimethylhydrosilyl, and
Dₓ is (dialkylsilyloxy)ₓ, especially (dimethyl-silyloxy)ₓ.

10. Process according to Claim 7, **characterized in that** polyorganosiloxanes are used which are selected from the group of the general formula (IV)
M'-O-Dₓ-D'_{y}-M (IV)
where
M' is dialkyl(hydro)silyl, especially dimethylhydrosilyl,
Dₓ is (dialkylsilyloxy)ₓ, especially (dimethyl-silyloxy)ₓ,
D' y is (-O(CH₃)Si(H)_{y})-.

11. Process according to one of Claims 1 to 10, **characterized in that** the reaction is performed without solvent.

12. Polyorganosiloxanes obtainable by a process according to one of Claims 1 to 11.

13. Substituted polyorganosiloxanes according to Claim 12, containing terminal and/or pendant Si-O-C-bonded homogeneous or mixed radicals selected from linear or branched, saturated, monounsaturated or polyunsaturated, aromatic, aliphatic-aromatic mono- or polyalcohols, polyethers, polyether alcohols or aminoalcohols, especially N-alkyl-, arylamino-EO- or -PO-alcohols, N-alkyl- or arylaminoalcohols, mono- or poly(meth)acrylated monoalkoxylates or polyalkoxylates, hydroxyalkyl methacrylates, hydroxyalkyl acrylates, halogenated mono- or polyalcohols, polyester monoalcohols, polyester polyalcohols, fluorinated or perfluorinated monoalkoxylates or polyalkoxylates or mixtures thereof, **characterized in that** they are free of residual constituents of hydrochloric acid and neutralization products which comprise chloride, **characterized in that** polyorganosiloxanes are used which are selected from the group of the comb-like and/or α,ω-disubstituted polydimethyl hydrosiloxanes of the general formula (I) or the reaction is performed without solvent.

14. Polyorganosiloxanes according to Claim 13, **characterized in that** the radicals are selected from ethoxy, butyl polyether, allyl polyether and nonylphenyl polyether, methyl polyether, ethylene oxide- and/or propylene oxide- and/or styrene oxide- and/or butylene oxide-containing polyethers, aminoalcohols, hydroxyethyl acrylate, hydroxypropyl acrylate, hydroxybutyl acrylate, Bisomer PEA 6, monoacrylated dicaprolactone (Sartomer SR 495), pentaerithritol triacrylate and/or aminopolyethers and mixtures thereof.

15. Use of polyorganosiloxanes according to Claim 12 for finishing textiles, as additives for plastics or in the masonry paints sector, as additives in radiation-curing coatings, especially printing inks, and/or as polyurethane foam stabilizers.

## Revendications

1. Procédé de mise en réaction de polyorganosiloxanes contenant des unités ≡Si(H) de formule générale (I) 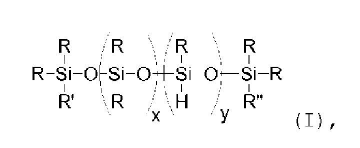 dans laquelle
au moins un atome d'hydrogène est relié à un atome de silicium,
R représente un ou plusieurs radicaux identiques ou différents, choisis parmi les radicaux alkyle, aryle, alkaryle ou aralkyle linéaires ou ramifiés, saturés, mono- ou polyinsaturés, de 1 à 20, notamment 1 à 10, atomes de carbone, les groupes halogénoalkyle de 1 à 20 atomes de carbone, les groupes siloxy et les groupes triorganosiloxy,
R' et R" représentent indépendamment l'un de l'autre H ou R,
x représente un nombre entier de 0 à 300,
y représente un nombre entier de 0 à 100,
avec au moins un alcool, qui est choisi dans le groupe constitué par les mono- ou polyalcools linéaires ou ramifiés, saturés, mono- ou polyinsaturés, aromatiques, aliphatiques-aromatiques, les polyéther-mono- ou polyéther-polyalcools, les aminoalcools, notamment les N-alkyl-, arylamino-EO-, -PO-alcools, les N-alkyl- ou arylaminoalcools, les monoalcoxylates ou polyalcoxylates mono- ou poly(méth)acrylés, les méthacrylates d' hydroxyalkyle, les acrylates d'hydroxyalkyle, les mono- ou polyalcools halogénés, les polyester-monoalcools, les polyester-polyalcools, les monoalcoxylates ou polyalcoxylates fluorés ou perfluorés, ainsi que leurs mélanges, avec un excès stoechiométrique de polyorganosiloxanes contenant des unités ≡Si(H) de formule générale (I), en présence d'un ou de plusieurs composés d'éléments du groupe principal III et/ou du groupe de transition 3 en tant que catalyseur, **caractérisé en ce que** la réaction est poursuivie après la transformation totale du composant alcool jusqu'à ce qu'aucun groupe ≡Si(H) ne soit détectable par volumétrie gazeuse.

2. Procédé selon la revendication 1, **caractérisé en ce qu'**un ou plusieurs catalyseurs contenant du bore sont utilisés en tant que composés d'éléments du groupe principal III.

3. Procédé selon la revendication 1 ou 2, **caractérisé en ce que** des halogénures, des composés d'alkyle, des composés contenant du fluor, cycloaliphatiques et/ou hétérocycliques sont utilisés en tant que composés d'éléments du groupe principal III.

4. Procédé selon la revendication 2 ou 3, **caractérisé en ce qu'**un catalyseur, qui est choisi dans le groupe constitué par
(C₅F₄)(C₆F₅)₂B ; (C₅F₄)₃B ; (C₆F₅)BF₂ ; BF(C₆F₅)₂ ; B(C₆F₅)₃ ; BCl₂(C₆F₅) ; BCl(C₆F₅)₂ ; B(C₆H₅₎(C₆F₅)₂ ; B(Ph)₂(C₆F₅) ; [C₆H₄(mCF₃)]₃B ; [C₆H₄(pOCF₃)]₃B ; (C₆F₅)B(OH)₂ ; (C₆F₅)₂BOH ; (C₆F₅)₂BH ; (C₆F₅)BH₂ ; (C₇H₁₁)BC₆F₅)₂ ; (C₈H₁₄B)(C₆F₅) ; (C₆F₅)₂B(OC₂H₅) ; (C₆F₅)₂B-CH₂CH₂Si(CH₃)₃ ; 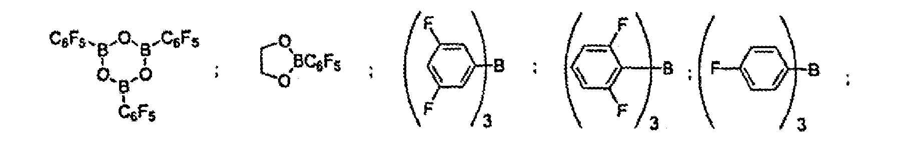 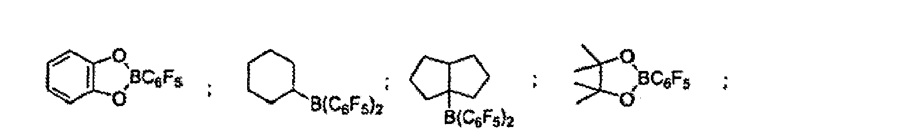 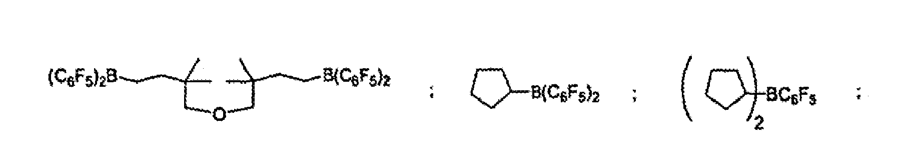 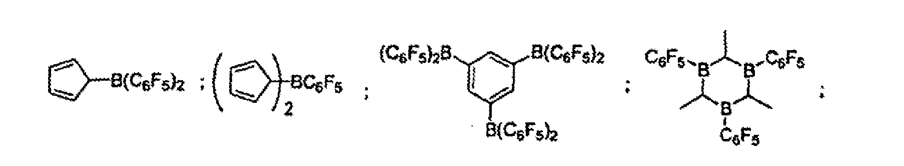 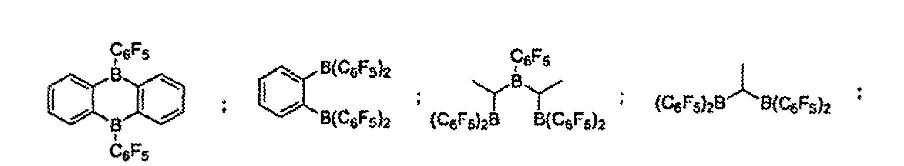 notamment le tris(perfluorotriphénylborane), l'éthérate de trifluorure de bore, le complexe borane-triphénylphosphine, le triphénylborane, le triéthylborane et le trichlorure de bore, la tris(pentafluorophényl)-boroxine (9Cl), le 4,4,5,5-tétraméthyl-2-(pentafluorophényl)-1,3,2-dioxaborolane (9Cl), le 2-(pentafluorophényl)-1,3,2-dioxaborolane (9Cl), le bis(pentafluorophényl)cyclohexylborane, le di-2,4-cyclopentadién-1-yl(pentafluorophényl)borane (9Cl), l'(hexahydro-3a(1H)-pentalényl) bis(pentafluorophényl)borane (9Cl), le 1,3-[2-[bis(pentafluorophényl)boryl]éthyl]tétraméthyldisiloxan e, la 2,4,6-tris(pentafluorophényl)borazine (7Cl, 8Cl, 9Cl), la 1,2-dihydro-2-(pentafluorophényl)-1,2-azaborine ( 9 Cl), le 2-(pentafluorophényl)-1,3,2-benzodioxaborole (9Cl), le tris(4-trifluorométhoxyphényl)borane, le tris(3-trifluorométhylphényl)borane, le tris(4-fluorophényl)borane, le tris(2,6-difluorophényl-)borane, le tris(3,5-difluorophényl)borane, le borate de méthyliumtriphényltétrakis(pentafluorophényle), le borate de N,N-diméthylaniliniumtétrakis(pentyfluorophényle), ainsi que leurs mélanges,
est utilisé.

5. Procédé selon l'une quelconque des revendications 1 à 4, **caractérisé en ce qu'**un alcool, qui est choisi dans le groupe constitué par le méthanol, l'éthanol, les alcools fluorés, les polyéther-alcools butyliques, les polyéther-alcools allyliques ou les polyéther-alcools de nonylphénol, les polyéther-alcools contenant de l'oxyde d'éthylène et/ou contenant de l'oxyde de propylène et/ou contenant de l'oxyde de styrène et/ou contenant de l'oxyde de butylène, les aminoalcools, les monoalcoxylates ou polyalcoxylates mono- ou poly(méth)acrylés, les (méth)acrylates d'hydroxyalkyle, les acrylates d'hydroxyalkyle, les mono- ou polyalcools halogénés, les polyester-monoalcools, les polyester-polyalcools, les monoalcoxylates ou polyalcoxylates fluorés ou perfluorés, ainsi que leurs mélanges, est utilisé.

6. Procédé selon l'une quelconque des revendications 1 à 5, **caractérisé en ce qu'**un rapport entre les quantités de matière des groupes ≡SiH et des groupes alcools dans la plage allant de 1:0, 1 à 1:0,99 équivalent molaire est ajusté.

7. Procédé selon l'une quelconque des revendications 1 à 6, **caractérisé en ce que** des polyorganosiloxanes qui sont choisis dans le groupe constitué par les polydiméthyl-hydrogénosiloxanes en forme de peigne et/ou α,□-disubstitués de formule générale (I) sont utilisés.

8. Procédé selon la revendication 7, **caractérisé en ce que** des polyorganosiloxanes qui sont choisis parmi les composés de formule générale (II)
M-O-Dₓ-D'_{y}-M (II)
dans laquelle
M représente trialkylsilyle, notamment triméthylsilyle,
Dₓ représente (dialkylsilyloxy)ₓ, notamment (diméthylsilyloxy)ₓ,
D' y représente (-O(CH₃)Si(H)_{y}-sont utilisés.

9. Procédé selon la revendication 7, **caractérisé en ce que** des polyorganosiloxanes qui sont choisis parmi les composés de formule générale (III)
M'-O-Dₓ-M' (III)
dans laquelle
M' représente dialkyl(hydrogéno)silyle, notamment diméthylhydrogénosilyle, et
Dₓ représente (dialkylsilyloxy)ₓ, notamment (diméthylsilyloxy)ₓ,
sont utilisés.

10. Procédé selon la revendication 7, **caractérisé en ce que** des polyorganosiloxanes qui sont choisis dans le groupe de formule générale (IV)
M'-O-Dₓ-D'_{y}-M' (IV)
dans laquelle
M' représente dialkyl(hydrogéno)silyle, notamment diméthylhydrogénosilyle,
Dₓ représente (dialkylsilyloxy)ₓ, notamment (diméthylsilyloxy)ₓ,
D' y représente (-O(CH₃)Si(H)_{y}-,
sont utilisés.

11. Procédé selon l'une quelconque des revendications 1 à 10, **caractérisé en ce que** la réaction est réalisée sans solvant.

12. Polyorganosiloxanes, pouvant être obtenus par un procédé selon l'une quelconque des revendications 1 à 11.

13. Polyorganosiloxanes substitués selon la revendication 12, contenant des radicaux unitaires ou mixtes reliés à Si-O-C terminaux et/ou latéraux, choisis parmi les mono- ou polyalcools linéaires ou ramifiés, saturés, mono- ou polyinsaturés, aromatiques, aliphatiques-aromatiques, les polyéthers, les polyéther-alcools ou les aminoalcools, notamment les N-alkyl-, arylamino-EO-, -PO-alcools, les N-alkyl- ou arylaminoalcools, les monoalcoxylates ou polyalcoxylates mono- ou poly(méth)acrylés, les méthacrylates d'hydroxyalkyle, les acrylates d'hydroxyalkyle, les mono- ou polyalcools halogénés, les polyester-monoalcools, les polyester-polyalcools, les monoalcoxylates ou polyalcoxylates fluorés ou perfluorés, ou leurs mélanges, **caractérisés en ce qu'**ils sont exempts de résidus d'acide chlorhydrique et de produits de neutralisation contenant du chlorure, **caractérisés en ce que** des polyorganosiloxanes qui sont choisis dans le groupe constitué par les polydiméthyl-hydrogénosiloxanes en forme de peigne et/ou α,□-disubstitués de formule générale (I) sont utilisés ou la réaction est réalisée sans solvant.

14. Polyorganosiloxanes selon la revendication 13, **caractérisés en ce que** les radicaux sont choisis parmi l'éthoxy, le butylpolyéther, l'allylpolyéther et le nonylphénylpolyéther, le méthylpolyéther, les polyéthers contenant de l'oxyde d'éthylène et/ou de l'oxyde de propylène et/ou de l'oxyde de styrène et/ou de l'oxyde de butylène, les aminoalcools, l'acrylate d'hydroxyéthyle, l'acrylate d' hydroxypropyle, l'acrylate d'hydroxybutyle, le Bisomer PEA 6, la dicaprolactone monoacrylée (Sartomer SR 495), le triacrylate de pentaérythritol et/ou l'aminopolyéther, ainsi que leurs mélanges.

15. Utilisation de polyorganosiloxanes selon la revendication 12 pour la finition de textiles, en tant qu'additifs pour plastiques ou dans le domaine de la peinture de bâtiments, en tant qu'additifs dans les revêtements durcissant par rayonnements, notamment les encres d'impression et/ou en tant que stabilisateurs de mousse de polyuréthane.
